# EUROPEAN PATENT APPLICATION

(11) **EP 1 892 737 A1**
(43) Date of publication of application: **27.02.2008**
(21) Application number: 06119424.7
(22) Date of filing: 23.08.2006
(51) Int. Cl.: H01H 13/702, H01H 13/79, G06F 3/033

(54) **Touchpad**

(71) Applicant: IEE INTERNATIONAL ELECTRONICS & ENGINEERING S.A., 6468 Echternach (LU)
(72) Inventor: Serban, Bogdan, 3376, Leudelange (LU); Noll, Alain, 6672, Gouvy (BE); Hunewald, Oliver, 54669, Bollendorf (DE); Boyer, Philippe, 57570, Boust (FR)
(74) Representative: Beissel, Jean

(57) **Abstract**

A pressure-responsive touchpad is provided with a touch-sensitive area, wherein the position of an actuator exerting a compressive force on the touch-sensitive area can be detected. The touchpad comprises a first sheet member and a second sheet member arranged at a certain distance from each other by a spacer, the spacer delimiting the touch-sensitive area, a first resistive electrode arranged in the touch-sensitive area on the first sheet member and a second resistive electrode arranged in the touch-sensitive area on the second sheet member in facing relationship with the first resistive electrode, in such a way that, in response to the compressive force acting on the touch-sensitive area, the first and second sheet members are pressed together whereby a contact area is formed and an electrical contact is established in the contact area between the at least first and second resistive electrodes. The touchpad comprises at least one light source and/or reflective element arranged underneath the first and second sheet members with respect to the direction of the compressive force. The first and second resistive electrodes are substantially intransparent for light coming from the at least one light source and/or reflective element, and the first and second electrodes, respectively, have at least one opening associated with the at least one light source and/or reflective element for allowing light to pass from the at least one light source and/or reflective element through the touch-sensitive area.

## Description

### Technical field

The present invention generally relates to a touchpad, in particular to a touchpad responsive to pressure exerted upon its touch-sensitive area.

### Background Art

Touchpads are commonly used as input devices in many of today's electrical appliances, e.g. laptops, handheld computers, navigation systems, portable phones or the like. In most cases, touchpads operate by capacitively sensing the position of an actuator, e.g. a finger or a stylus.

Depending on the appliance, touchpads can be configured so as to output the relative motion of the actuator or its absolute position. In some of today's modern appliances, it is moreover desirable that the touchpad can be switched between different modes of operation, e.g. between relative motion detection for steering a cursor on a screen and absolute position detection for using the touchpad as a keyboard. In the latter case, different functions are associated to different locations ("keys") of the touchpad so that, when the user wants to use a particular function, they have to touch the corresponding location of the touchpad. To give the user some guidance where they have to place the actuator on the touchpad, the different keys are preferably provided with symbols. Advantageously, these symbols are illuminated when the keys are available to the user (i.e. when the keyboard functionality is activated) and dark when the keys are not available (i.e. when the keyboard functionality is deactivated). A backlighting arrangement can be used for that purpose.

As stated above, the present invention concerns a touchpad responsive to pressure exerted upon its touch-sensitive area. Such a touchpad may then be based upon a film-type pressure-responsive sensor. Film-type pressure-responsive sensors capable of detecting the position of a compressive force are well known in the art of pressure or force sensing. They comprise a first sheet member and a second sheet member arranged at a certain distance from each other by a spacer that delimits the touch-sensitive area. In so-called through-mode sensors, the first sheet member carries a first one of two resistive electrodes, e.g. made of carbon ink, and the second sheet member carries the second one of the two resistive electrodes in such a way that, in response to the compressive force acting on the touch-sensitive area, the first and second sheet members are pressed together whereby a contact area is formed between the resistive electrodes and an electrical contact is established in the contact area. In so-called shunt-mode sensors, one of the sheet members carries at least two electrodes arranged in spaced relationship thereon, and the other sheet member carries a contact layer, which is arranged in facing relationship with the electrodes so as to shunt them when the sheet elements are pressed together in response to the compressive force acting on the touch-sensitive area.

Document WO 2004/049364, for instance, relates to a pressure-responsive data input device comprising several keys arranged in at least two rows. A unidirectional position detector of film-type construction is associated with each row of keys. Each unidirectional position sensor enables the detection of the actuated key along the direction of the unidirectional position detector. The unidirectional position sensors are interconnected in such a way that a control circuit can detect in which row a key has been actuated.

### Technical problem

It is an object of the present invention to provide an improved pressure-responsive touchpad. This object is achieved by a touchpad as claimed in claim 1, 13 or 25.

### General Description of the Invention

The invention generally concerns a pressure-responsive touchpad provided with a touch-sensitive area, wherein the position of an actuator exerting a compressive force on the touch-sensitive area can be detected.

In a first, preferred aspect, the touchpad may be configured for operating in through-mode. Such a touchpad comprises a first sheet member and a second sheet member arranged at a certain distance from each other by a spacer, the spacer delimiting the touch-sensitive area, a first resistive electrode arranged in the touch-sensitive area on the first sheet member and a second resistive electrode arranged in the touch-sensitive area on the second sheet member in facing relationship with the first resistive electrode, in such a way that, in response to the compressive force acting on the touch-sensitive area, the first and second sheet members are pressed together whereby a contact area is formed and an electrical contact is established in the contact area between the at least first and second resistive electrodes. According to the invention, a through-mode touchpad comprises at least one light source and/or reflective element arranged underneath the first and second sheet members with respect to the direction of the compressive force, the first and second resistive electrodes are substantially intransparent for light coming from the at least one light source and/or reflective element, and the first and second electrodes respectively have at least one opening associated with the at least one light source and/or reflective element for allowing light to pass from the at least one light source and/or reflective element through the touch-sensitive area.

In a second aspect, the touchpad may be configured for operating in shunt-mode. Such a touchpad a first sheet member and a second sheet member arranged at a certain distance from each other by a spacer that delimits the touch-sensitive area, at least two electrodes and a contact layer arranged in the touch-sensitive area of the touchpad between the first and second sheet members in such a way that, in response to the compressive force acting on the touch-sensitive area, the first and second sheet members are pressed together, whereby a contact area is formed and an electrical contact is established in the contact area between the at least two electrodes via the contact layer. According to the invention, such a shunt-mode touchpad comprises, at least one light source and/or reflective element, arranged underneath the first and second sheet members with respect to the direction of the compressive force, the contact layer is substantially intransparent for light coming from the at least one light source and/or reflective element, and at least the contact layer has at least one opening associated with the at least one light source and/or reflective element for allowing light to pass from the at least one light source and/or reflective element through the touch-sensitive area. In particular, the contact layer may comprise pattern elements that delimit between them the at least one opening.

In the case that the touchpad includes one or more light sources, the latter may comprise e.g. a light emitting device (LED), a lamp, a liquid crystal display (LCD) etc. In the case that the touchpad includes one or more reflective elements, these can include e.g. a mirror, a retroreflector, a reflection grating, a dimmable liquid crystal mirror etc. In case of a reflective element, at least a portion of the incident light is reflected back and illuminates the touch pad from behind. Preferably, the carrier sheets are made of material that is transparent or semitransparent for light emitted from the light source and/or reflective element. For instance, a silicone rubber sheet with a thickness of 0.5 to a few mm, or a polycarbonate sheet with a thickness of less than 1 mm could be chosen. The resistive electrodes can e.g. be made from carbon ink or another material with suitable properties. More conductive electrodes are preferably made of silver ink. If some of the layers of the touchpad are opaque, they preferably include, like the resistive electrodes, respectively the contact layer, an opening to let light pass through the touch-sensitive area.

Preferably, the first and second resistive electrodes, respectively the contact layer in case of a shunt mode touchpad, have a plurality of openings associated with the at least one light source and/or reflective element for allowing light to pass from the light source and/or reflective element through the touch-sensitive area. In this case, the touchpad may advantageously comprise a plurality of light sources and/or reflective elements, that the openings are associated to.

The touchpad can be constructed so as to detect the position of an actuator with respect to a first axis only, or, alternatively, in a plane, i.e. with respect to a first and a second non-collinear axes.

Preferably, the dimensions and the distribution of the openings are chosen in such a way that their presence does not significantly affect the operation of the touchpad. Indeed, if the shape and or the dimensions of the openings are inappropriate, the movements of the actuator in the touch-sensitive area might not be detected accurately. For instance, a linear movement could be distorted into some curvilinear trace, or the trace of a continuous movement could turn out to be interrupted at the locations of the openings. Thus, in direction of the axis or axes, with respect to which the position is detected, the at least one opening preferably has dimensions that are smaller than the typical dimension of the contact area in direction of the first axis. The extent and the shape of the contact area between the first and second sheet members depend on certain parameters, such as the amount of compressive force applied, the flexibility of the sheet members, the layout of the touch-sensitive area, the thickness of the spacer (typically in the range from 50 to 100 µm), and the diameter of the actuator. As touchpads are designed for specific conditions of use, the designer normally knows the typical dimensions of the contact area and can suitably choose the dimensions of the opening or the openings in the contact layer. If, for normal operation, the contact area is larger than the openings, it is ensured that, when the actuator slides continuously over the location of the opening, the contact between the sheet elements is not suddenly interrupted, and that the likelihood of undesired discontinuities in the output signal is low. Assuming, for instance, that the typical diameter of the contact area is comprised in the range from 0.5 to 2 cm (e.g. with a finger as the actuator), it is preferred that the diameter of the openings is lower than 0.5 cm. Preferably, the shape of the openings is chosen point-symmetric.

Advantageously, the total dimension (e.g. the total width) of the openings in direction of the first and/or the second axis amounts to not more than half, more preferably not more than one third of the dimension (e.g. the width) of the touch-sensitive area in direction of the first and/or second axis, respectively. It will be appreciated that in the less restrictive case, the distortions are small enough to allow the detection of simple movements of the actuator such as, for instance, linear up/down or left/right movements e.g. for scrolling through a menu. In the more restrictive case (i.e. if the total dimension of the openings in direction of the first and/or the second axis amounts to not more than one third of the corresponding dimension of the touch-sensitive area), the distortions are small enough to allow the detection of more complicated movements, in particular curvilinear movements (such as writing letters, numbers or other characters).

According to a preferred embodiment of the shunt-mode touchpad, the contact layer comprises a pressure-sensitive layer, i.e. a layer whose resistance decreases gradually with the amount of pressure applied, such that the resistance of the contact layer in the contact area decreases gradually when the compressive force increases. In case of the through-mode touchpad, at least one of the resistive electrodes may advantageously comprise such a pressure-sensitive layer.

To further improve the mechanical properties of the touchpad around the at least one opening, the contact layer (in case of a shunt-mode touchpad) and the resistive electrodes (in case of a through-mode touchpad) may be made locally thicker circumferentially around the at least one opening, e.g. by an additional print layer. It is worthwhile noting that at least one of the sheet members may comprise a multilayered configuration with an inner supporting sheet and an outer activation layer for introducing a compressive force acting on the touchpad into a central region of the touch-sensitive area, as disclosed in WO 2004/053906.

If, in a shunt-mode touchpad, the contact layer comprises pattern elements, the latter may comprise generally parallel lines, e.g. straight lines, sinusoidal lines or zigzags, between which the at least one opening extends. More preferably, the pattern elements comprise a first set of generally parallel first lines and a second set of generally parallel second lines crossing the first lines so as to form a grid.

It should be noted that the pressure-responsive touchpads described herein may additionally operate as capacitively sensing touchpads.

### Brief Description of the Drawings

Further details and advantages of the present invention will be apparent from the following detailed description of several not limiting embodiments with reference to the attached drawings, wherein:
Fig. 1 is a schematic cross sectional view of a locally backlighted touchpad operating in shunt-mode;
Fig. 2 is a schematic cross sectional view of another locally backlighted shunt-mode touchpad;
Fig. 3 is a schematic cross sectional view of a shunt-mode touchpad including a reflective element;
Fig. 4 is a schematic cross sectional view of another locally backlighted shunt-mode touchpad designed for use with a stylus;
Fig. 5 is a schematic cross sectional view of a variant of the touchpad of Fig. 2
Fig. 6 is a schematic top view of a shunt-mode touchpad capable of detecting an actuator position with respect to a single axis;
Fig. 7 is a schematic top view of a shunt-mode touchpad capable of detecting an actuator in two dimensions;
Fig. 8 is a schematic cross sectional view of a locally backlighted touchpad operating in through-mode;
Fig. 9 is a schematic cross sectional view of another locally backlighted through-mode touchpad;
Fig. 10 is a schematic cross sectional view of a through-mode touchpad including a reflective element;
Fig. 11 is a schematic cross sectional view of another locally backlighted through-mode touchpad designed for use with a stylus;
Fig. 12 is a schematic cross sectional view of a variant of the touchpad of Fig. 9;
Fig. 13 is an exploded view of the upper layer of the touchpad of Fig. 9;
Fig. 14 is an illustration of different possible shapes of the openings of the contact layer.

### Description of Preferred Embodiments

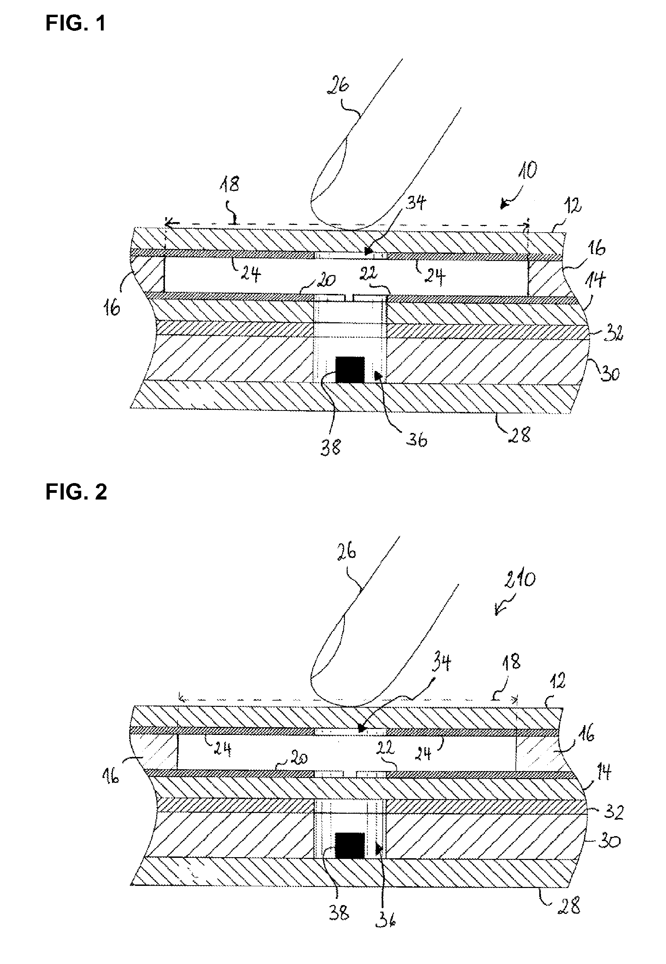

Fig. 1 schematically shows the cross section of a locally backlighted pressure-responsive shunt-mode touchpad 10. The touchpad 10 comprises a first sheet member 12 and a second sheet member 14, arranged at a certain distance from one another by a spacer 16. The spacer 16 delimits the touch-sensitive area 18 of the touchpad 10. Sheet member 14 carries first and second, mutually spaced electrodes 20, 22 arranged on the surface facing the first sheet member 12. Sheet member 12 carries a contact layer 24 on the surface facing the electrodes 20, 22. If an actuator, such as finger 26, exerts a compressive force upon the touch-sensitive area 18 of the touch pad 10, the first and second sheet elements 12, 14 are brought closer together against their resiliency and get into contact with one another form a contact area if the compressive force is sufficient. When this happens, an electrical current may flow between electrodes 20, 22, via the contact layer 24. The arrangement of the electrodes 20, 22 and the contact layer 24 is such that the position of the contact area (i.e. the position of the centroid of the contact area) can be detected by a suitable evaluation circuit.

The second sheet member 14 is supported by a support structure comprising a support plate 28, e.g. a printed circuit board (PCB), and intermediate layers 30, 32. Sheet member 14, intermediate layers 30, 32 and contact layer 24 are provided with openings, shown at numerals 34 and 36, arranged opposed one another. A light source 38, e.g. an LED is arranged within opening 36 on the support plate 28. Openings 34 and 36 define the centre location of a "key". If the keyboard functionality of the touchpad is activated, the light source 38 is lit and by pressing on the corresponding location, the user selects the function associated to the key.

Sheet member 12 is made of a material at least partially transparent for the light emitted by the light source 38. The contact layer 24, the electrodes 20, 22, the second sheet member 14 and intermediate layers 30, 32 may be made of opaque materials or suitable transparent or semitransparent materials.

Fig. 2 shows a variant of a backlighted touchpad 210. Touchpad 210 differs from the touchpad of Fig. 1 in that the second sheet member 14 is continuous and does not comprise an opening above light source 38. Instead, second sheet member is made of a transparent or semi-transparent material.

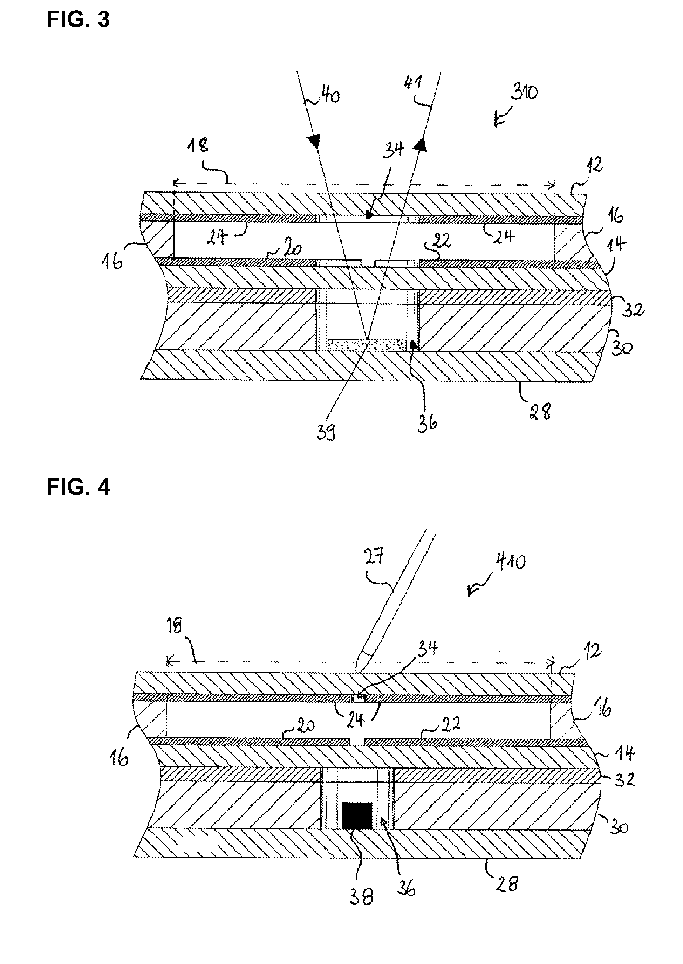

Fig.3 shows schematically the cross section of a pressure-responsive touchpad 310 provided with a reflective element 39. The touchpad 310 comprises a first sheet member 12, a second sheet member 14, arranged at a certain distance from one another by a spacer 16. The spacer 16 delimits the touch-sensitive area 18 of the touchpad 310. Sheet member 14 carries first and second, mutually spaced electrodes 20, 22 arranged on the surface facing the first sheet member 12. Sheet member 12 carries a contact layer 24 on the surface facing the electrodes 20, 22. If an actuator, such as finger 26, exerts a compressive force upon the touch-sensitive area 18 of the touch pad 310, the first and second sheet elements 12, 14 are brought closer together against their resiliency and get into contact with one another to form a contact area if the compressive force is sufficient. When this happens, an electrical current may flow between electrodes 20, 22, via the contact layer 24. The arrangement of the electrodes 20, 22 and the contact layer 24 is such that the position of the contact area (i.e. the position of the centroid of the contact area) can be detected by a suitable evaluation circuit.

The second sheet member 14 is supported by a support structure comprising a support plate 28, e.g. a PCB, and intermediate layers 30, 32. Intermediate layers 30, 32 and contact layer 24 are provided with openings, shown at numerals 34 and 36, arranged opposed one another. A reflective element 39 is arranged within opening 36 on the support plate 28. Openings 34 and 36 define the centre location of a "key".

Sheet members 12 and 14 are made of a material at least partially transparent for the incident and the reflected light. The contact layer 24, the electrodes 20, 24, the second sheet member 14 and intermediate layers 30, 32 may be made of opaque materials or suitable transparent or semitransparent materials. Obviously, if sheet member 14 is also provided with an opening (as in Fig. 1) it can also be made of an opaque material.

The reflective element 39 can be a mirror, as in the illustrated case, preferably a dimmable liquid crystal mirror. If the keyboard functionality of the touchpad is deactivated, such a liquid crystal mirror is dimmed so that it reflects (at 41) less of the incoming light 40 than it reflects if the keyboard functionality is activated. The reflective element may also comprise a reflection grating so that the different colors of the incident light are reflected in different directions. As another alternative, the reflective element could also comprise a retroreflector.

Fig. 4 schematically represents a backlighted touchpad 410 designed for use with a stylus 27. The construction of touchpad 410 is generally the same as that of touchpad 210, except for the dimension of opening 34. As touchpad 410 is used with a stylus, the typical bending radius of the upper sheet member 12 when pressed down can be smaller that in case of actuation with a finger. Because of the reduced dimension of the opening 34, the contact area is substantially larger than the opening 34 under the typical usage conditions and it is thus ensured that, when the actuator slides continuously over the location of the opening, the contact between the sheet elements is not suddenly interrupted, and that the likelihood of undesired discontinuities or distortions in the output signal is reduced.

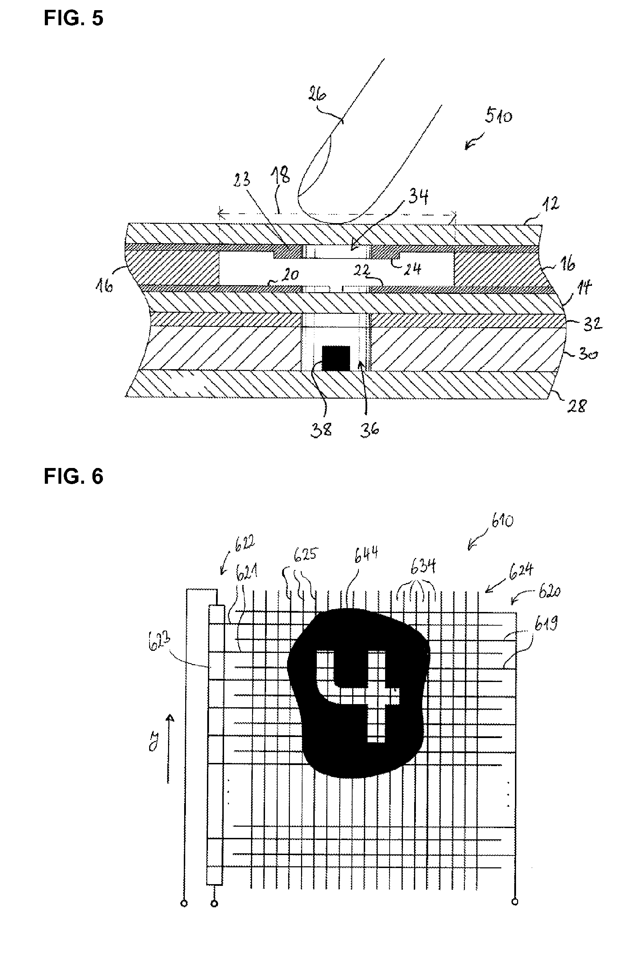

Fig. 5 shows a variant of the touchpad of Fig. 2. The contact layer 24 of touchpad 510 is circumferentially thickened (shown at reference numeral 23) around opening 34. The thickened circumference 23 improves the contact of the contact layer 24 with the electrodes 20, 22 when the actuator presses down the first sheet member 12 and reduces the likelihood of undesired discontinuities or distortions in the output signal. Furthermore, the circumferential thickening improves the response to off-centre activation in the keyboard mode: a human user does not always press the centre of the location dedicated to a certain key which results in variations of the centroid of the contact area; with the circumferential thickening, the variations of the centroid of the contact area are reduced.

Fig. 6 represents a schematic top view of a touchpad 610 capable of sensing the position of an actuator with respect to a single axis (y-axis in the drawing). The device 610 comprises a first comb-shaped electrode 620 and a second comb-shaped electrode 622. The conductive fingers 619, 621 of the electrodes 620, 622 are arranged interdigitating. The fingers 621 of the second electrode 622 are resistively interconnected in series by means of the resistive electrode portion 623. The contact layer 624 comprises a plurality of pattern elements (straight lines 625 in the example given by the drawing), which define between them a plurality of openings 634 and which extend substantially perpendicular with respect to the fingers 619, 621 of the electrodes 620, 622.

For position detection of the actuating member, a voltage is applied across the resistive portion 623 of electrode 622 so that the different fingers 621 of the second electrode 622 are at different electric potentials. If the actuator locally establishes an electrical contact between a finger 621 of the second electrode 622 and the first electrode 620 though the contact layer 624, the first electrode 620 is brought at the electrical potential of the contacted finger 621 of the second electrode 622, which allows the determination of the position of the contact area and thus of the actuator. The fingers 619, 621 of the electrodes 620, 622 could be made of transparent or opaque material. Light from the back of the touchpad may pass through the touch-sensitive area of the touchpad 610 via openings 634 in the contact layer 624. A mask 644 (only partially shown), arranged on top of the touch-sensitive area, comprises symbols (e.g. letters or numbers) associated with particular locations of the touch-sensitive area, so as to indicates keys the user can press if the keyboard functionality of the touchpad is activated.

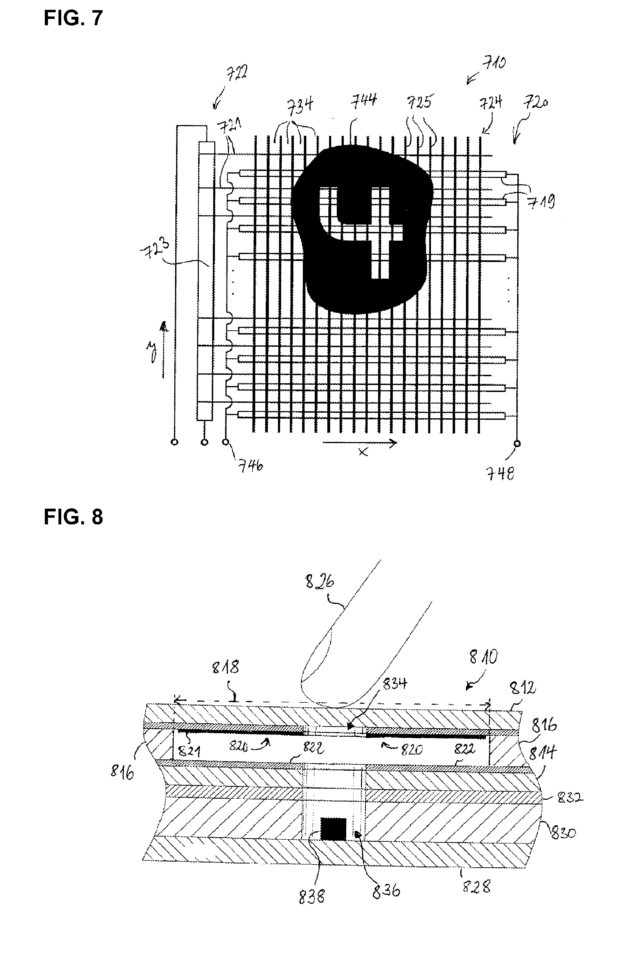

Fig. 7 schematically shows a touchpad 710 capable of detecting an actuator in two dimensions. The device 710 comprises a first electrode 720 and a second comb-shaped electrode 722. First electrode 720 comprises a plurality of resistive strips 719 arranged electrically in parallel between two terminals 746, 748. The resistive strips 719 extend substantially parallel to one another. The conductive fingers 721 of the second electrode 722 are resistively interconnected in series by means of a resistive electrode portion 723. The conductive fingers 721 of the second electrode 722 extend substantially parallel to the resistive strips 719 of the first electrode 720. The contact layer 724 comprises a plurality of pattern elements (straight lines 725 in the example given by the drawing), which define between them a plurality of openings 734 and which extend substantially perpendicular with respect to the resistive strips 719 of the first electrode 720 and the fingers 721 of the second electrode 722.

For position detection of the actuating member with respect to the x-axis, a voltage is applied across the resistive strips 719 of electrode 720 so that the electric potential linearly varies along the x-axis. If the actuator locally establishes an electrical contact between a finger 721 of the second electrode 722 and a resistive strip 719 of the first electrode 720 though the contact layer 724, the second electrode 722 is brought at the electrical potential of the contacted resistive strip 719 at the contact location, which allows the determination of the x-coordinate of the contact area and thus of the actuator. For position detection of the actuating member with respect to the y-axis, a voltage is applied across the resistive portion 723 of electrode 722 so that the different fingers 721 of the second electrode 722 are at different electric potentials. If the actuator locally establishes an electrical contact between a finger 721 of the second electrode 722 and a resistive strip 719 of the first electrode 720 though the contact layer 724, the first electrode 720 is brought at the electrical potential contacted finger 721 of the second electrode 722, which allows the determination of the y-coordinate of the contact area and thus of the actuator.

The electrodes 720, 722 could be made of transparent or opaque material. Light from the back of the touchpad may pass though the touch-sensitive area of the touchpad via openings 734 in the contact layer. A mask 744 (only partially shown), arranged on top of the touch-sensitive area, comprises symbols (e.g. letters or numbers) associated with particular locations of the touch-sensitive area, so as to indicate keys the user can press if the keyboard functionality of the touchpad is activated.

Fig. 8 schematically shows the cross section of a locally backlighted pressure-responsive through-mode touchpad 810. The touchpad 810 comprises a first sheet member 812 and a second sheet member 814, arranged at a certain distance from one another by a spacer 816. The spacer 816 delimits the touch-sensitive area 818 of the touchpad 810. Sheet member 812 carries a first resistive electrode 820 and the second sheet member 814 carries a second resistive electrode 822 arranged in facing relationship with the first electrode 820. The resistive electrodes preferably comprise a layer made of carbon ink, which is substantially intransparent for the visible light if applied in the required layer thickness. The first resistive electrodes additionally comprises a layer of pressure-sensitive material 821 arranged on the side of the carbon layer that faces the second resistive electrode 822. If an actuator, such as finger 826, exerts a compressive force upon the touch-sensitive area 818 of the touch pad 810, the first and second sheet elements 812, 814 are brought closer together against their resiliency, which eventually makes the first and second electrodes get into contact with one another form a contact area if the compressive force is sufficient. When this happens, an electrical current may flow between electrodes 820, 822. The arrangement of the electrodes 820, 822 is such that the position of the contact area (i.e. the position of the centroid of the contact area) can be detected by a suitable evaluation circuit.

The second sheet member 814 is supported by a support structure comprising a support plate 828, e.g. a printed circuit board (PCB), and intermediate layers 830, 832. Sheet member 814, intermediate layers 830, 832 and the resistive electrodes 820, 822 are provided with openings, shown at numerals 834 and 836, arranged opposed one another. A light source 838, e.g. an LED is arranged within opening 836 on the support plate 828. Openings 834 and 836 define the centre location of a "key". If the keyboard functionality of the touchpad 810 is activated, the light source 838 is lit and by pressing on the corresponding location, the user selects the function associated to the key. Sheet member 812 is made of a material at least partially transparent for the light emitted by the light source 838. The electrodes 820, 822, the second sheet member 14 and intermediate layers 30, 32 may be made of opaque materials or suitable transparent or semitransparent materials.

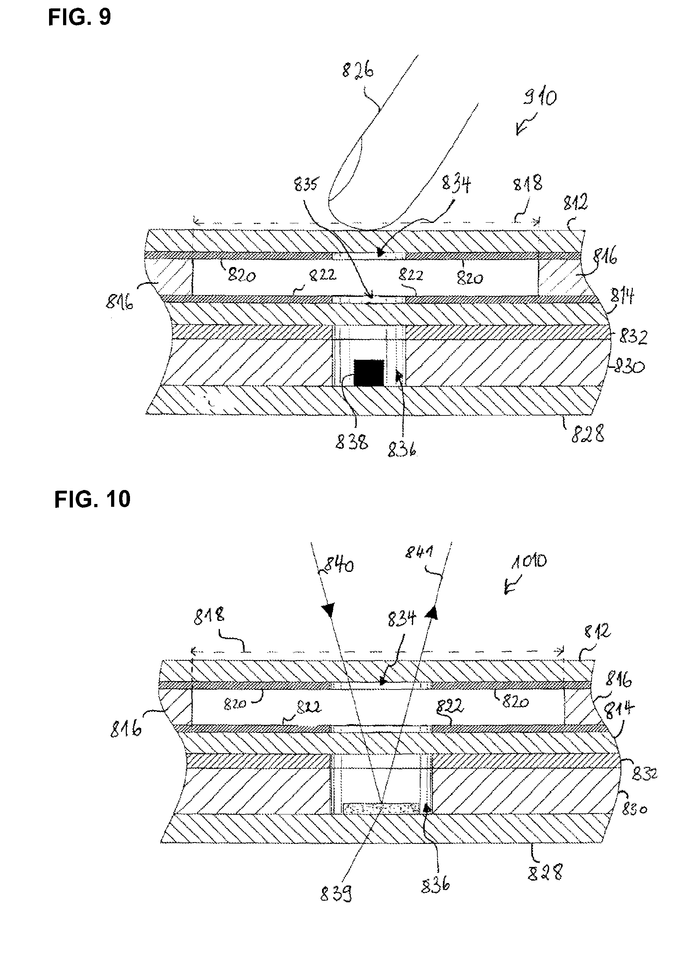

Fig. 9 shows a variant of a locally backlighted touchpad 810. Touchpad 810 differs from the touchpad of Fig. 8 in that the second sheet member 814 is continuous and does not comprise an opening above light source 838 and in that the pressure-sensitive layer 821 of the first resistive electrode has been omitted. Second sheet member 814 is made of a transparent or semi-transparent material. Opening 836 extends underneath the second sheet member 814 through the intermediate layers 830, 832, whereas the second resistive electrode 822 has an opening 835 that extends above the second sheet member 814.

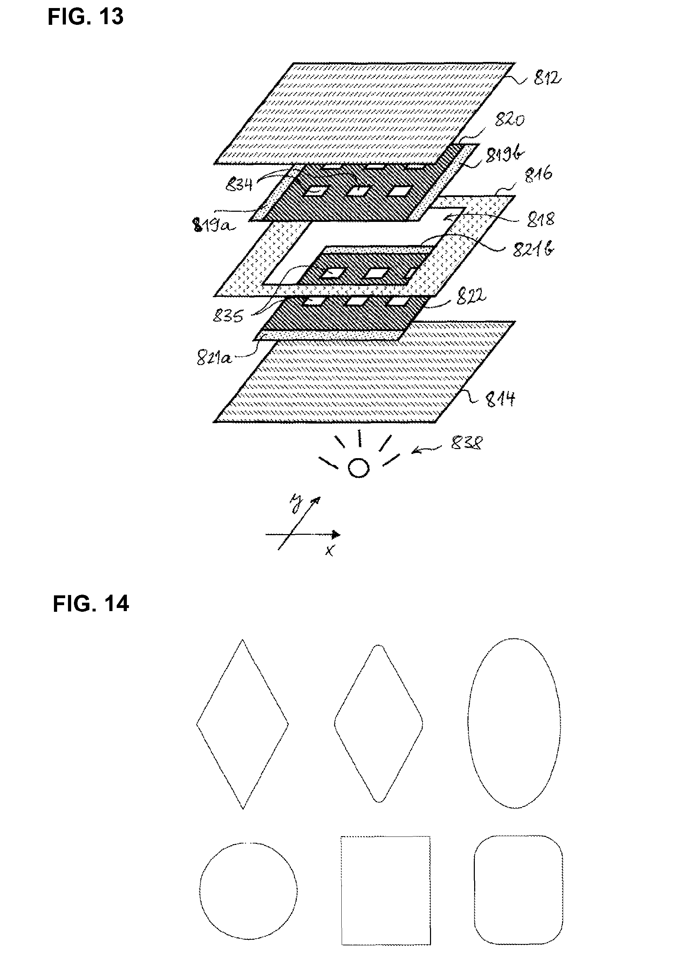

Fig. 13 shows an exploded schematic perspective view of the upper layers of touchpad 910 of Fig. 9. The flexible sheet members 812 and 814 are transparent or semitransparent for the light emitted by the light source 838. However, the resistive electrodes 820 and 822 and possibly the spacer 816 are substantially intransparent for this light. The openings 834 and 835 in the electrodes define regions, through which light can nevertheless pass so that symbols on the upper sheet member can be illuminated. The position of a contact area between the resistive electrodes 820 and 822 can e.g. be detected as follows. First, a predetermined potential difference (e.g. 5 V) is applied between leads 819a and 819b of the first electrode 820 and the resulting voltage is detected on lead 821a or 821 b of the second electrode 822. This yields the position along the x-axis. Second, a predetermined potential difference (e.g. 5 V) is applied between leads 821 a and 821 b of the second electrode 822 and the resulting voltage is detected on lead 819a or 819b of the first electrode 820. This yields the position along the y-axis.

Fig. 10 shows schematically the cross section of a through-mode pressure-responsive touchpad 1010 provided with a reflective element 839. The construction of touchpad 1010 is essentially that of touchpad 910 of Fig. 9 except that the light source has been replaced by the reflective element 839.

The reflective element 39 can be a mirror, as in the illustrated case, preferably a dimmable liquid crystal mirror. If the keyboard functionality of the touchpad is deactivated, such a liquid crystal mirror is dimmed so that it reflects (at numeral 841) less of the incoming light 840 than it reflects if the keyboard functionality is activated. The reflective element 839 may also comprise a reflection grating so that the different colors of the incident light are reflected in different directions. As another alternative, the reflective element 839 could also comprise a retroreflector.

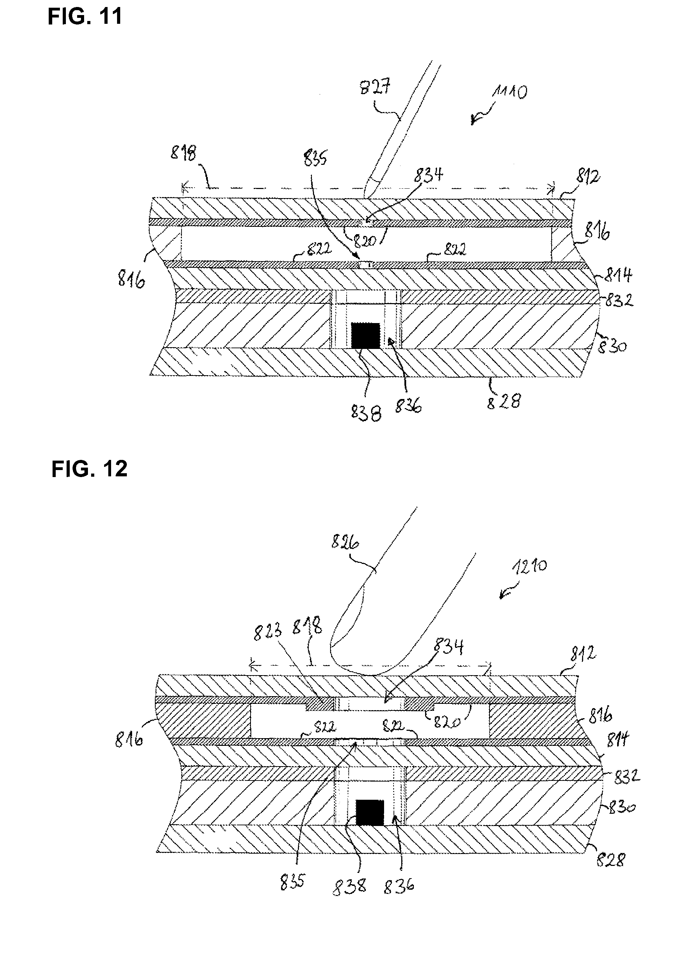

Fig. 11 schematically represents a backlighted touchpad 1110 designed for use with a stylus 827. The construction of touchpad 1110 is generally the same as that of touchpad 910, except for the dimensions of the openings 834 and 835. As touchpad 1110 is used with a stylus, the typical bending radius of the upper sheet member 812 when pressed down can be smaller that in case of actuation with a finger. Because of the reduced dimension of the openings 834, 835, the contact area is substantially larger than the openings 834 and 835 under the typical usage conditions and it is thus ensured that, when the actuator slides continuously over the location of the opening, the contact between the sheet elements is not suddenly interrupted, and that the likelihood of undesired discontinuities or distortions in the output signal is reduced.

Fig. 12 shows a variant of the touchpad of Fig. 9. The first resistive electrode of touchpad 1210 is circumferentially thickened (shown at reference numeral 823) around opening 834. The thickened circumference 823 improves the contact of the first resistive electrode 820 with the second resistive electrode 822 when the actuator 826 presses down the first sheet member 812 so as to reduce the likelihood of undesired discontinuities or distortions in the output signal.

Fig. 8 shows several point-symmetric shapes for the openings 34, 36. Other opening shapes are indeed not excluded. The dimensions of openings 34 and 36 do not need to be the same.

## Claims

1. A touchpad having a touch-sensitive area for detecting a position of an actuator exerting a compressive force on said touch-sensitive area, said touchpad comprising
a first sheet member and a second sheet member arranged at a certain distance from each other by a spacer, said spacer delimiting said touch-sensitive area;
a first resistive electrode arranged in said touch-sensitive area on said first sheet member and a second resistive electrode arranged in said touch-sensitive area on said second sheet member in facing relationship with said first resistive electrode, in such a way that, in response to the compressive force acting on said touch-sensitive area, the first and second sheet members are pressed together whereby a contact area is formed and an electrical contact is established in said contact area between the at least first and second resistive electrodes
**characterized by** at least one light source and/or reflective element arranged underneath said first and second sheet members with respect to the direction of said compressive force;
in that said first and second resistive electrodes are substantially intransparent for light coming from said at least one light source and/or reflective element;
and in that said first and second electrodes respectively have at least one opening associated with said at least one light source and/or reflective element for allowing light to pass from said at least one light source and/or reflective element through said touch-sensitive area.

2. The touchpad as claimed in claim 1, wherein the position of an actuator is detectable with respect to a first axis and wherein said at least one opening has a dimension in direction of said first axis that is smaller than a typical dimension of said contact area in direction of said first axis.

3. The touchpad as claimed in claim 2, wherein the position of an actuator is detectable with respect to a second axis and wherein said at least one opening has a dimension in direction of said second axis that is smaller than a typical dimension of said contact area in direction of said second axis.

4. The touchpad as claimed in claim 1, wherein said first and second resistive electrodes respectively have a plurality of openings associated with said at least one light source and/or reflective element for allowing light to pass from said light source and/or reflective element through said touch-sensitive area.

5. The touchpad as claimed in claim 4, wherein the position of an actuator is detectable with respect to a first axis and wherein each one of said openings has a dimension in direction of said first axis that is smaller than a typical dimension of said contact area in direction of said first axis.

6. The touchpad as claimed in claim 5, wherein a total dimension of said openings in direction of said first axis amounts to not more than half the dimension of said touch-sensitive area in direction of said first axis.

7. The touchpad as claimed in claim 5 or 6, wherein the position of an actuator is detectable with respect to a second axis and wherein each one of said openings has a dimension in direction of said second axis that is smaller than a typical dimension of said contact area in direction of said second axis.

8. The touchpad as claimed in claim 7, wherein a total dimension of said openings in direction of said second axis amounts to not more than half the dimension of said touch-sensitive area in direction of said second axis.

9. The touchpad as claimed in claim 4, comprising a plurality of light sources and/or reflective elements, which said openings are associated to.

10. The touchpad as claimed in any one of claims 1 to 9, wherein at least one of said resistive electrodes comprises a pressure-sensitive layer.

11. The touchpad as claimed in any one of claims 1 to 10, wherein at least one of said resistive electrodes is circumferentially thickened around said at least one opening.

12. The touchpad as claimed in any one of claims 1 to 11, wherein at least one of said first and second resistive electrodes comprises a layer of pressure-sensitive material.

13. A touchpad having a touch-sensitive area for detecting a position of an actuator exerting a compressive force on said touch-sensitive area, said touchpad comprising
a first sheet member and a second sheet member arranged at a certain distance from each other by a spacer, said spacer delimiting said touch-sensitive area;
at least two electrodes and a contact layer arranged in the touch-sensitive area of the touchpad between said first and second sheet members in such a way that, in response to the compressive force acting on said touch-sensitive area, the first and second sheet members are pressed together whereby a contact area is formed and an electrical contact is established in said contact area between the at least two electrodes via said contact layer;
**characterized by** at least one light source and/or reflective element arranged underneath said first and second sheet members with respect to the direction of said compressive force;
in that said contact layer is substantially intransparent for light coming from said at least one light source and/or reflective element;
and in that said contact layer has at least one opening associated with said at least one light source and/or reflective element for allowing light to pass from said at least one light source and/or reflective element through said touch-sensitive area.

14. The touchpad as claimed in claim 13, wherein the position of an actuator is detectable with respect to a first axis and wherein said at least one opening has a dimension in direction of said first axis that is smaller than a typical dimension of said contact area in direction of said first axis.

15. The touchpad as claimed in claim 14, wherein the position of an actuator is detectable with respect to a second axis and wherein said at least one opening has a dimension in direction of said second axis that is smaller than a typical dimension of said contact area in direction of said second axis.

16. The touchpad as claimed in claim 13, wherein said contact layer has a plurality of openings for allowing light to pass from said light source and/or reflective element through said touch-sensitive area.

17. The touchpad as claimed in claim 16, wherein the position of an actuator is detectable with respect to a first axis and wherein each one of said openings has a dimension in direction of said first axis that is smaller than a typical dimension of said contact area in direction of said first axis.

18. The touchpad as claimed in claim 17, wherein a total dimension of said openings in direction of said first axis amounts to not more than half the dimension of said touch-sensitive area in direction of said first axis.

19. The touchpad as claimed in claim 17 or 18, wherein the position of an actuator is detectable with respect to a second axis and wherein each one of said openings has a dimension in direction of said second axis that is smaller than a typical dimension of said contact area in direction of said second axis.

20. The touchpad as claimed in claim 19, wherein a total dimension of said openings in direction of said second axis amounts to not more than half the dimension of said touch-sensitive area in direction of said second axis.

21. The touchpad as claimed in claim 16, comprising a plurality of light sources and/or reflective elements, to which said openings are associated to.

22. The touchpad as claimed in any one of claims 13 to 21, wherein said contact layer comprises layer of pressure-sensitive material.

23. The touchpad as claimed in any one of claims 13 to 22, wherein said contact layer is circumferentially thickened around said at least one opening.

24. The touchpad as claimed in any one of claims 13 to 23, wherein said electrodes are transparent for light emitted from said light source and/or said reflective element.

25. A touchpad having a touch-sensitive area for detecting a position of an actuator exerting a compressive force on said touch-sensitive area, said touchpad comprising
a first sheet member and a second sheet member arranged at a certain distance from each other by a spacer, said spacer delimiting said touch-sensitive area;
at least two electrodes and a contact layer arranged in the touch-sensitive area of the touchpad between said first and second sheet members in such a way that, in response to the compressive force acting on said touch-sensitive area, the first and second sheet members are pressed together whereby a contact area is formed and an electrical contact is established in said contact area between the at least two electrodes via said contact layer;
**characterized by** at least one light source and/or reflective element arranged underneath said first and second sheet members with respect to the direction of said compressive force;
in that said contact layer is substantially intransparent for light coming from said at least one light source and/or reflective element;
and in that at least said contact layer comprises pattern elements, said pattern elements delimiting between them at least one opening associated with said at least one light source and/or reflective element for allowing light to pass from said at least one light source and/or reflective element through said touch-sensitive area.

26. The touchpad as claimed in claim 25, wherein said pattern elements comprise generally parallel lines, said at least one opening extending between said generally parallel lines.

27. The touchpad as claimed in claim 25, wherein said pattern elements comprise a first set of generally parallel first lines and a second set of generally parallel second lines crossing said first lines so as to form a grid.
